(19) Europäisches Patentamt
European Patent Office
Office européen des brevets

(11) **EP 2 731 244 B1**

(12) **EUROPEAN PATENT SPECIFICATION**

(45) Date of publication and mention
of the grant of the patent:
**27.02.2019   Bulletin 2019/09**

(51) Int Cl.:
*H02M 1/42* *(2007.01)*     *H02M 3/158* *(2006.01)*

(21) Application number: **13191705.6**

(22) Date of filing: **06.11.2013**

(54) **Controller for active converter, and method and program therefor**

Steuergerät für aktiven Wandler sowie Verfahren und Programm dafür

Contrôleur pour convertisseur actif, procédé et programme associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2012   JP 2012246296**

(43) Date of publication of application:
**14.05.2014   Bulletin 2014/20**

(73) Proprietor: **MITSUBISHI HEAVY INDUSTRIES THERMAL SYSTEMS, LTD.**
**Tokyo 108-8215 (JP)**

(72) Inventors:
• **Sumiya, Atsuyuki**
**Tokyo, 108-8215 (JP)**
• **Yoshida, Junichi**
**Tokyo, 108-8215 (JP)**
• **Takeuchi, Hiroyuki**
**Tokyo, 108-8215 (JP)**
• **Iwaki, Michizo**
**Tokyo, 108-8215 (JP)**
• **Kanie, Tetsuo**
**Tokyo, 108-8215 (JP)**

(74) Representative: **Intès, Didier Gérard André et al Cabinet Beau de Loménie**
**158 rue de l'Université**
**75340 Paris Cedex 07 (FR)**

(56) References cited:
**EP-A- 2 485 380          CN-Y- 201 018 704**
**JP-A- H10 127 046        US-A1- 2008 315 852**
**US-A1- 2009 301 801**

## Description

{Technical Field}

The present invention relates to a controller for an active converter, and a method and a program therefor.

{Background Art}

In an apparatus such as an air conditioner using an inverter, for example, higher harmonic currents are likely to be produced by a full-wave rectification circuit. Thus, a passive filter or an active converter is used for reducing the higher harmonic currents (for example, see PTL 1).

{Citation List}

{Patent Literature}

{PTL 1} Japanese Unexamined Patent Application, Publication No. Hei 11-341684
US 2008/315 852 relates to electronic power conversion and, more specifically, to a controller adapted to estimate an average input power to a power processing circuit, and method of operating the same.

{Summary of Invention}

{Technical Problem}

When an active converter is used to suppress higher harmonics, current is continuously provided to step up DC voltage. A low step-up level results in insufficient suppression of the higher harmonics, and a high step-up level results in a voltage exceeding a component withstand voltage. It is therefore required to increase withstand voltages of components such that the components can withstand desired stepped-up voltages. Moreover, in general, when an input voltage and an output voltage of the converter are detected to control the output voltage based on the input voltage, variations in a stepped-up voltage occur depending on component variations. It is therefore requested to design the component withstand voltage with the variations in the stepped-up voltage taken into consideration.

While it is necessary to suppress step-up variations to a minimum, the increase in the withstand voltages of the components may result in an increase in costs. Thus, according to PTL 1, step-up accuracy is enhanced by performing step-up control independent of the component variations, thereby reducing the component withstand voltage.

In conventional methods, however, absolute value control is performed, in which the accumulation of voltage errors introduced during voltage measurement causes unnecessarily high step-up, and the stepped-up voltage is likely to exceed a component withstand voltage.

The present invention has been made in view of these circumstances, and an object of the present invention is to provide a controller for an active converter which can reduce a component withstand voltage and stably suppress higher harmonics, and to provide a method and a program therefor.

{Solution to Problem}

A first aspect of the present invention is a controller according to claim 1.

With such a configuration, when the active converter is not in operation, the correction value used for correcting the detection deviation of the output voltage with respect to the input voltage detected by the voltage detection means is determined, and when the active converter is in operation, the step-up ratio control is performed on the detected output voltage based on the correction value.

Thus, the input voltage is assumed to be equal to the output voltage when the active converter is not in operation. If there is a detection deviation of the output voltage with respect to the input voltage by the voltage detection means, the correction value used for correcting the detection deviation is obtained, and a detected value of the output voltage in operation is corrected with the correction value to perform proportional control. Accordingly, a stepped-up voltage is not influenced by variations of the voltage detection means, and a component withstand voltage can thereby be reduced. Further, the reduction of the variations in the stepped-up voltage ensures stable higher harmonics suppressing capability.

In the controller described above, the correction value determination means preferably determines, when the active converter is not in operation, a correction value based on a first error between the actual input voltage and the input voltage detected by the voltage detection means and a second error between the actual output voltage and the output voltage detected by the voltage detection means.

The calibration of the errors between the actual voltage value and the detected value allows elements having minimum withstand voltages (component withstand voltages) to be used.

In any of the controllers described above, the correction value determination means (13) is preferably configured to determine the correction value by dividing the second error ($\gamma 2$) by the first error ($\gamma 1$), and the control means is preferably configured to correct, when the active converter is in operation, the output voltage detected by the voltage detection means by multiplying the output voltage by the correction value, and perform step-up control based on the corrected output voltage.

This allows the corrected output voltage to be easily determined.

A second aspect of the present invention is a method for controlling an active converter according to claim 3.

A third aspect of the present invention is a program for controlling an active converter according to claim 4.

{Advantageous Effects of Invention}

The present invention provides an advantage of reducing the component withstand voltage and stably suppressing the higher harmonics.

{Brief Description of Drawings}

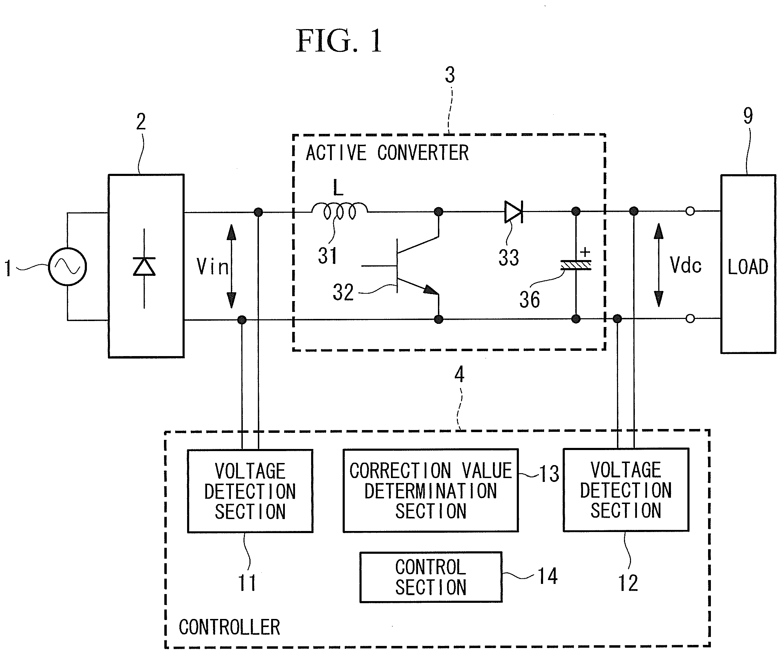

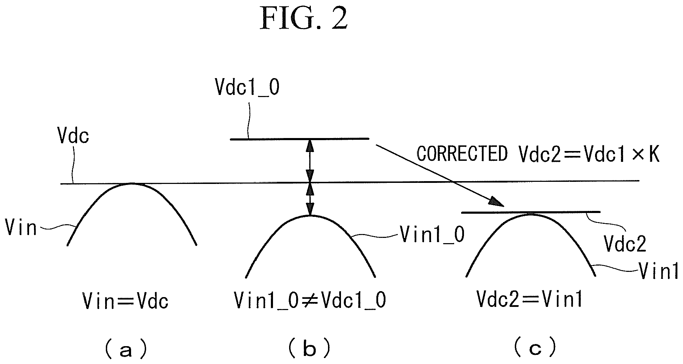

{Fig. 1} Fig. 1 is a diagram showing a schematic configuration of a controller for an active converter according to an embodiment of the present invention.
{Fig. 2} Fig. 2(a) is a diagram showing the relationship between an actual input voltage and an actual output voltage not in step-up control, Fig. 2(b) is a diagram showing detected values such that an input voltage is not equal to an output voltage, and Fig. 2(c) is a diagram showing an output voltage obtained by correcting a detection deviation with a correction value.

{Description of Embodiments}

An embodiment of a controller for an active converter, and a method and a program therefor according to the present invention will be described below with reference to the drawings.

Fig. 1 is a schematic circuit diagram showing a configuration of an inverter according to an embodiment of the present invention.

As shown in Fig. 1, the inverter according to the present embodiment includes: a rectification circuit 2 connected to an AC power source 1; an active converter 3 connected to an output terminal of the rectification circuit 2; and a controller 4 to which a detection signal of an input voltage and a detection signal of an output voltage of the active converter 3 are input to control the active converter 3. Note that an example of the present embodiment is described where the controller is used for an inverter of an air conditioner, but the controller is not limited for air conditioners.

The rectification circuit 2 is formed of, for example, a diode bridge.

The active converter 3 includes: a reactor 31 connected to a positive output terminal of the rectification circuit 2; a diode 33 connected to the reactor 31 in series; a switching element 32 connected between a negative output line and a connection point of the reactor 31 and an anode of the diode 33; and a smoothing capacitor 36 connected between the diode 33 and a load 9. The switching element 32 is, for example, an IGBT (Insulated Gate Bipolar Transistor), a MOSFET (Metal-Oxide-Semiconductor Field-Effect Transistor), a transistor, or the like.

A predetermined step-up pulse signal is provided to a gate terminal, which is a control input of the switching element 32, to perform on-off control of the switching element 32. When the switching element 32 is turned on, current flows into the switching element 32 through the reactor 31, and then, energy is accumulated in the reactor 31. On the other hand, when the switching element 32 is turned off, current flows through the reactor 31 and the diode 33 to charge the smoothing capacitor 36.

This allows a stepped-up DC voltage to be obtained across the smoothing capacitor 36.

The controller 4 includes voltage detection sections (voltage detection means) 11 and 12, a correction value determination section (a correction value determination means) 13, and a control section (a control means) 14.

The voltage detection sections 11 and 12 detect an input voltage and an output voltage of the active converter 3. Specifically, the voltage detection section 11 is connected to the input side of the active converter 3, and detects the input voltage of the active converter 3 to output a detection signal corresponding to the input voltage. The voltage detection section 12 is connected to the output side of the active converter 3, and detects the output voltage of the active converter 3 to output a detection signal corresponding to the output voltage.

The correction value determination section 13 determines, when the active converter 3 is not in operation, a correction value used for correcting a detection deviation K of the output voltage with respect to the input voltage detected by the voltage detection sections 11 and 12. Specifically, the correction value determination section 13 determines, when the active converter 3 is not in operation, the correction value based on a first error between an actual input voltage and the input voltage detected by the voltage detection section 11 and a second error between an actual output voltage and the output voltage detected by the voltage detection section 12.

A method for determining the correction value with the correction value determination section 13 will be described below.

It is assumed that the following expression (1) holds because when the active converter 3 is not in operation, a peak value of an input voltage is equal to an output voltage. Here, for the active converter 3 not in operation, $Vin\_0$ denotes the input voltage after full-wave rectification of an AC voltage detected by the voltage detection section 11, and $Vdc\_0$ denotes the output voltage detected by the voltage detection section 12.

$$Vdc\_0/Vin\_0 = 1 \qquad (1)$$

In an actual detection circuit, since a detected value contains errors (a first error: $\gamma1$ and a second error: $\gamma2$), an input voltage Vin1_0 in a case where the active converter 3 is not in operation and the input voltage includes an error, and an output voltage Vdc1_0 in this case are represented by the following expressions (2) and (3). Note that the errors in the detected value include variations of components and circuits.

$$\mathrm{Vdc1\_0 = \gamma2 \times Vdc\_0} \qquad (2)$$

$$\mathrm{Vin1\_0 = \gamma1 \times Vin\_0} \qquad (3)$$

Then, the detection deviation K (error) of the output voltage with respect to the input voltage in the case where the active converter 3 is not in operation, is represented by the following expression (4).

$$\mathrm{K = Vdc1\_0/Vin1\_0}$$
$$= \mathrm{\gamma2/\gamma1 \times (Vdc\_0/Vin\_0)}$$
$$= \mathrm{\gamma2/\gamma1} \qquad (4)$$

Thus, the detection deviation K is represented as K=$\gamma2/\gamma1$. Moreover, the detection deviation K similarly occurs also in cases other than the case not in operation, and an output voltage Vdc in operation is therefore corrected with the detection deviation K.

Where Vin1 denotes an input voltage (a detected value) of the active converter 3 in operation and Vdc1 denotes an output voltage (a detected value) of the active converter 3 in operation, the following expression (5) holds because the detection deviation K similarly occurs also in cases other than the case not in operation. Here, Vdc denotes an actual output voltage and Vin denotes an actual input voltage.

$$\mathrm{Vdc/Vin = \gamma2 \times Vdc1/(\gamma1 \times Vin1)}$$
$$= \mathrm{K \times Vdc1/Vin1} \qquad (5)$$

Where Vdc2 denotes a corrected output voltage, an output voltage with respect to an input voltage is represented by the following expression (6) based on the above expressions (1) to (5) .

$$\mathrm{Vdc/Vin = \gamma2/\gamma1 \times (Vdc1/Vin1)}$$
$$= \mathrm{K \times (Vdc1/Vin1)}$$
$$= \mathrm{Vdc2/Vin1} \qquad (6)$$

The relationship between an input voltage and an output voltage will be described with reference to Fig. 2. For example, even if the actual input voltage Vin and the actual output voltage Vdc are in the relationship as shown in Fig. 2(a) when the active converter 3 is not in operation, an input voltage Vin1_0 is not equal to an output voltage Vdc1_0 if the detected value includes an error, as shown in Fig. 2(b). Fig. 2(b) shows how an input voltage detected value falls below the actual voltage and how an output voltage detected value rises above the actual voltage. Here, as shown in Fig. 2(c), by correcting the output voltage Vdc1 with respect to the input voltage with the detection deviation K, the errors between the input voltage Vin and the output voltage Vdc are calibrated, obtaining an output voltage Vdc2.

The control section 14 corrects, when the active converter 3 is in operation, the output voltage detected by the voltage detection section 12 with the correction value, to perform step-up ratio control. Specifically, the control section 14 performs the correction by multiplying the detected value Vdc1 of the output voltage detected by the voltage detection section 12 by the detection deviation K, to perform the step-up ratio control based on the corrected output voltage Vdc2. Where $\alpha$ denotes a step-up ratio (e.g., 6%) and Vdc2=$\alpha \times$Vin1 holds, $\alpha$ is represented as follows based on the above expression (5).

$$\mathrm{\alpha = Vdc/Vin}$$
$$= \mathrm{K \times Vdc1/Vin1}$$
$$= \mathrm{Vdc2/Vin1}$$
$$\mathrm{(K = Vdc1\_0/Vin1\_0)} \qquad (7)$$

That is, by performing step-up control by using Vdc2 and Vin1, the voltage can be controlled in disregard of a voltage detection error because the step-up ratio $\alpha$ becomes Vdc/Vin, which is an actual voltage ratio, according to the above expression (7).

Next, a basic operation of the inverter according to the present embodiment will be described.

An AC voltage from the power source 1 is rectified by the rectification circuit 2 and provided to the active converter 3. In the active converter 3, during the period for which the switching element 32 is turned on, current flows into the switching element 32 through the reactor 31; then, energy is accumulated in the reactor 31. On the other hand, during the period for which the switching element 32 is turned off, current flows through the reactor 31 and the diode 33 to charge the smoothing capacitor 36. Further, the energy accumulated in the reactor 31 is discharged.

Thus, the operation of the active converter 3 reduces higher harmonic currents from the output voltage (the output current) of the rectification circuit 2, and smoothed voltage (current) is provided to the load 9.

Next, a function of the controller 4 for the active converter 3 according to the present embodiment will be described.

When the active converter 3 is not in operation, the voltage detection section 11 detects the input voltage Vin_0 of the active converter 3, and the voltage detection section 12 detects the output voltage Vdc_0 of the active converter 3. When the active converter 3 is not in operation and it is assumed that the detected values of the voltages contain errors ($\gamma$1 and y2), the detection deviation K of the output voltage with respect to the input voltage is represented as K=$\gamma$2/$\gamma$1.

Since the detection deviation K similarly occurs also in cases other than the case not in operation, the output voltage Vdc1 (the detected value) in operation is corrected with the detection deviation K, thus obtaining the output voltage Vdc2. The target value of the output voltage is not an absolute value but a proportional value with respect to the input voltage such that the input voltage Vin1 equals to the output voltage Vdc2. Since the step-up ratio $\alpha$ equals to Vdc/Vin, the voltage is controlled in disregard of the voltage detection error.

Note that the correction, which is performed with the detection deviation K of the output voltage with respect to the input voltage taken into consideration, is preferably performed every time the air conditioner is started from the nonoperation state (i.e., every time the circuit is activated). For example, since a constant of a resistor changes (varies) depending on conditions such as the ambient temperatures in summer and winter, the correction is performed more accurately by calibrating at every start.

In the controller 4 according to the aforementioned embodiment, the whole or part of the process described above may be separately configured by using software. In such a configuration, the controller 4 includes a CPU (Central Processing Unit), a main storage device such as a RAM (Random Access Memory), and a computer readable storage medium in which a program (e.g., a control program) for achieving the whole or part of the process described above is recorded. Then, the CPU reads out the program recorded in the storage medium, and information is processed and subjected to arithmetic operations by the CPU to achieve the processing similar to that of the aforementioned controller 4.

Here, the computer readable storage medium is a magnetic disk, a magneto-optical disk, a CD (Compact Disk)-ROM (Read Only Memory), a DVD (Digital Versatile Disk)-ROM, a semiconductor memory, or the like. Further, the computer program may be delivered to a computer through a communication line to cause the computer, which has received the delivery, to execute the program.

As described above, with the controller 4 for the active converter, the method, and the program according to the present embodiment, when the active converter 3 is not in operation, the correction value used for correcting the detection deviation K of the output voltage with respect to the input voltage detected by the voltage detection sections 11 and 12 is determined, and when the active converter 3 is in operation, the detected output voltage is subjected to the step-up ratio control based on the correction value.

Thus, with the correction value used for correcting the detection deviation of the output voltage with respect to the input voltage detected not in operation, the detected value of the output voltage in operation is subjected to proportional control; therefore the stepped-up voltage is not influenced by the variations of the voltage detection sections 11 and 12, which allows a component withstand voltage to be reduced. Further, the reduction of the variation in the stepped-up voltage ensures stable higher harmonics suppressing capability.

In addition, in voltage measurement, the errors between the input voltage and the output voltage are calibrated, thereby preventing a component withstand voltage from being exceeded due to unnecessary amplification, which may occur as errors on the voltage measurement side add up. Thus, withstand-voltage elements having minimum component withstand voltages can be used.

Note that, for example, when the present invention was applied to a situation where an error of 28 V is included between the actual voltage and the voltage detected value, the error was reduced to about 4 V, which substantially accounts for the error from AD conversion by a microcontroller.

{Reference Signs List}

2      RECTIFICATION CIRCUIT
3      ACTIVE CONVERTER
4      CONTROLLER
9      LOAD
11, 12      VOLTAGE DETECTION SECTION
13      CORRECTION VALUE DETERMINATION SECTION
14      CONTROL SECTION

**Claims**

1. A controller (4) for an active converter (3) for removing higher harmonics from an input current containing the higher harmonics flowing out from a rectification circuit (2) for converting alternating current into direct current, the controller comprising:

   a voltage detection means (11, 12) for detecting an input voltage (Vin) and an output voltage (Vdc) of the active converter (3);
   a correction value determination means (13) for determining, in a case when the active converter

(3) is not in operation, a correction value, which is a detection deviation (K), and which is used for correcting a deviation of the output voltage (Vdc_0) with respect to the input voltage (Vin_0) detected by the voltage detection means (11, 12), the correction value being a ratio ($\gamma1/\gamma2$) of a first error ($\gamma1$) between the actual input voltage (Vin_0) and the input voltage (Vin1_0) detected by the voltage detection means to a second error ($\gamma2$) between the actual output voltage (Vdc_0) and the output voltage (Vdc1_0) detected by the voltage detection means; and a control means (14) for correcting, when the active converter is in operation, the output voltage (Vdc1) detected by the voltage detection means (11, 12) with the correction value, to perform step-up ratio control.

2. The controller (4) for an active converter according to claim 1, wherein the correction value determination means (13) is configured to determine the correction value by dividing the second error ($\gamma2$) by the first error ($\gamma1$), and the control means (14) is configured to correct, when the active converter (3) is in operation, the output voltage (Vdc1) detected by the voltage detection means by multiplying the output voltage by the correction value, and perform step-up control based on the corrected output voltage (Vdc2).

3. A method for controlling an active converter (3) for removing higher harmonics from an input current containing the higher harmonics flowing out from a rectification circuit (2) for converting alternating current into direct current, the method comprising:

a first step of detecting an input voltage (Vin) and an output voltage (Vdc) of the active converter (3); a second step of determining, in a case when the active converter is not in operation, a correction value, which is a detection deviation (K), and which is used for correcting a deviation of the output voltage (Vdc_0) with respect to the input voltage (Vin_0) detected in the first step, the correction value being a ratio ($\gamma1/\gamma2$) of a first error ($\gamma1$) between the actual input voltage (Vin_0) and the input voltage (Vin1_0) detected by the voltage detection means to a second error ($\gamma2$) between the actual output voltage (Vdc_0) and the output voltage (Vdc1_0) detected by the voltage detection means; and a third step of correcting, when the active converter is in operation, the output voltage (Vdc1) detected in the first step with the correction value, to perform step-up ratio control.

4. A program for controlling an active converter (3) for removing higher harmonics from an input current containing the higher harmonics flowing out from a rectification circuit (2) for converting alternating current into direct current, the program causing a computer to execute:

a first process of detecting an input voltage (Vin) and an output voltage (Vdc) of the active converter (3); a second process of determining, in a case when the active converter is not in operation, a correction value, which is a detection deviation (K), and which is used for correcting a deviation of the output voltage (Vdc_0) with respect to the input voltage (Vin_0) detected in the first process, the correction value being a ratio ($\gamma1/\gamma2$) of a first error ($\gamma1$) between the actual input voltage (Vin_0) and the input voltage (Vin1_0) detected by the voltage detection means to a second error ($\gamma2$) between the actual output voltage (Vdc_0) and the output voltage (Vdc1_0) detected by the voltage detection means; and a third process of correcting, when the active converter is in operation, the output voltage (Vdc_1) detected in the first process with the correction value, to perform step-up ratio control.

**Patentansprüche**

1. Steuergerät (4) für einen aktiven Umrichter (3) zur Entfernung höherer Oberwellen aus einem Eingangsstrom, der die höheren Oberwellen enthält, die einem Gleichrichterkreis (2) entfließen, um Wechsel- in Gleichstrom umzuwandeln, wobei das Steuergerät umfasst:

ein Spannungserkennungsmittel (11, 12) zur Erkennung einer Eingangs- (Vin) und einer Ausgangsspannung (Vdc) des aktiven Umrichters (3); ein Mittel (13) zur Bestimmung von Korrekturwerten, um einen Korrekturwert zu bestimmen, der eine Erkennungsabweichung (K) ist und zur Korrektur einer von den Spannungserkennungsmitteln (11, 12) erkannten Abweichung der Ausgangsspannung (Vdc_0) relativ zur Eingangsspannung (Vin_0) verwendet wird, wenn sich der aktive Umrichter (3) nicht im Betrieb findet, wobei der Korrekturwert ein Verhältnis (y1/y2) eines ersten Fehlers (y1) zwischen der Ist-Eingangsspannung (Vin_0) und der von den Spannungserkennungsmitteln erkannten Eingangsspannung (Vin1_0) zu einem zweiten Fehler (y2) zwischen der Ist-Ausgangsspannung (Vdc_0) und der von den Spannungserkennungsmitteln erkannten Ausgangsspannung (Vdc1_0) ist; und

ein Steuerungsmittel (14) zur Korrektur der von den Spannungserkennungsmitteln (11, 12) erkannten Ausgangsspannung (Vdc1) mit dem Korrekturwert, um eine Übersetzungsregelung vorzunehmen.

2. Steuergerät (4) eines aktiven Umrichters nach Anspruch 1, wobei das Mittel (13) zur Bestimmung des Korrekturwerts derart konfiguriert ist, dass es den Korrekturwert durch Teilen des zweiten Fehlers (y2) durch den ersten Fehler (y1) ermittelt, und das Steuerungsmittel (14) derart konfiguriert ist, dass es die von den Spannungserkennungsmitteln erkannte Ausgangsspannung (Vdc1) durch Multiplizieren der Ausgangsspannung mit dem Korrekturwert korrigiert und aufgrund der korrigierten Ausgangsspannung eine Übersetzungsregelung (Vdc2) vornimmt, wenn sich der aktive Umrichter (3) im Betrieb befindet.

3. Verfahren zur Steuerung eines aktiven Umrichters (3) zur Entfernung höherer Oberwellen aus einem Eingangsstrom, der die höheren Oberwellen enthält, die einem Gleichrichterkreis (2) entfließen, um Wechsel- in Gleichstrom umzuwandeln, wobei das Verfahren umfasst:

in einem ersten Schritt: Erkennen einer Eingangs- (Vin) und einer Ausgangsspannung (Vdc) des aktiven Umrichters (3);
in einem zweiten Schritt: Bestimmen eines Korrekturwerts, der eine Erkennungsabweichung (K) ist und zur Korrektur einer im ersten Schritt erkannten Abweichung der Ausgangsspannung (Vdc_0) relativ zur Eingangsspannung (Vin_0) verwendet wird, wenn sich der aktive Umrichter (3) nicht im Betrieb findet, wobei der Korrekturwert ein Verhältnis (y1/y2) eines ersten Fehlers (y1) zwischen der Ist-Eingangsspannung (Vin_0) und der von den Spannungserkennungsmitteln erkannten Eingangsspannung (Vin1_0) zu einem zweiten Fehler (y2) zwischen der Ist-Ausgangsspannung (Vdc_0) und der von den Spannungserkennungsmitteln erkannten Ausgangsspannung (Vdc1_0) ist; und
in einem dritten Schritt: Korrigieren der im ersten Schritt erkannten Ausgangsspannung (Vdc1) mit dem Korrekturwert, um eine Übersetzungsregelung vorzunehmen, wenn sich der aktive Umrichter im Betrieb befindet.

4. Programm zur Steuerung eines aktiven Umrichters (3) zur Entfernung höherer Oberwellen aus einem Eingangsstrom, der die höheren Oberwellen enthält, die einem Gleichrichterkreis (2) entfließen, um Wechsel- in Gleichstrom umzuwandeln, wobei das Programm einen Computer zur Ausführung folgender Prozesse veranlasst:

in einem ersten Prozess: Erkennen einer Eingangs- (Vin) und einer Ausgangsspannung (Vdc) des aktiven Umrichters (3);
in einem zweiten Prozess: Bestimmen eines Korrekturwerts, der eine Erkennungsabweichung (K) ist und zur Korrektur einer im ersten Prozess erkannten Abweichung der Ausgangsspannung (Vdc_0) relativ zur Eingangsspannung (Vin_0) verwendet wird, wenn sich der aktive Umrichter (3) nicht im Betrieb findet, wobei der Korrekturwert ein Verhältnis (y1/y2) eines ersten Fehlers (y1) zwischen der Ist-Eingangsspannung (Vin_0) und der von den Spannungserkennungsmitteln erkannten Eingangsspannung (Vin1_0) zu einem zweiten Fehler (y2) zwischen der Ist-Ausgangsspannung (Vdc_0) und der von den Spannungserkennungsmitteln erkannten Ausgangsspannung (Vdc1_0) ist; und
in einem dritten Prozess: Korrigieren der im ersten Prozess erkannten Ausgangsspannung (Vdc_1) mit dem Korrekturwert, um eine Übersetzungsregelung vorzunehmen, wenn sich der aktive Umrichter im Betrieb befindet.

**Revendications**

1. Contrôleur (4) pour un convertisseur actif (3) destiné à éliminer des harmoniques supérieures provenant d'un courant d'entrée contenant les harmoniques supérieures sortant d'un circuit de redressement (2) pour convertir un courant alternatif en courant continu, le contrôleur comprenant :

un moyen de détection de tension (11, 12) pour détecter une tension d'entrée (Vin) et une tension de sortie (Vdc) du convertisseur actif (3) ;
un moyen de détermination de valeur de correction (13) pour déterminer, dans le cas où le convertisseur actif (3) n'est pas en cours de fonctionnement, une valeur de correction, qui correspond à un écart de détection (K) et qui est utilisée en vue de corriger un écart de la tension de sortie (Vdc_0) par rapport à la tension d'entrée (Vin_0) détectée par le moyen de détection de tension (11, 12), la valeur de correction correspondant à un rapport ($\gamma 1/\gamma 2$) d'une première erreur ($\gamma 1$) entre la tension d'entrée réelle (Vin_0) et la tension d'entrée (Vin1_0) détectée par le moyen de détection de tension à une seconde erreur ($\gamma 2$) entre la tension de sortie réelle (Vdc_0) et la tension de sortie (Vdc1_0) détectée par le moyen de détection de tension ; et
un moyen de commande (14) pour corriger, lorsque le convertisseur actif est en cours de fonctionnement, la tension de sortie (Vdc1) détectée par le moyen de détection de tension (11, 12) avec la valeur de correction, en vue de mettre en oeuvre une commande de rapport élévateur.

2. Contrôleur (4) pour un convertisseur actif selon la revendication 1, dans lequel le moyen de détermination de valeur de correction (13) est configuré de manière à déterminer la valeur de correction en divisant la seconde erreur ($\gamma$2) par la première erreur ($\gamma$1) ; et

le moyen de commande (14) est configuré de manière à corriger, lorsque le convertisseur actif (3) est en cours de fonctionnement, la tension de sortie (Vdc1) détectée par le moyen de détection de tension, en multipliant la tension de sortie par la valeur de correction, et à mettre en oeuvre une commande de rapport élévateur sur la base de la tension de sortie corrigée (Vdc2).

3. Procédé de commande d'un convertisseur actif (3) pour éliminer des harmoniques supérieures d'un courant d'entrée contenant les harmoniques supérieures sortant d'un circuit de redressement (2) pour convertir un courant alternatif en courant continu, le procédé comprenant :

une première étape consistant à détecter une tension d'entrée (Vin) et une tension de sortie (Vdc) du convertisseur actif (3) ;
une deuxième étape consistant à déterminer, dans le cas où le convertisseur actif n'est pas en cours de fonctionnement, une valeur de correction, qui correspond à un écart de détection (K) et qui est utilisée en vue de corriger un écart de la tension de sortie (Vdc_0) par rapport à la tension d'entrée (Vin_0) détectée au cours de la première étape, la valeur de correction correspondant à un rapport ($\gamma$1/ y2) d'une première erreur ($\gamma$1) entre la tension d'entrée réelle (Vin_0) et la tension d'entrée (Vin1_0) détectée par le moyen de détection de tension à une seconde erreur ($\gamma$2) entre la tension de sortie réelle (Vdc_0) et la tension de sortie (Vdc1_0) détectée par le moyen de détection de tension ; et
une troisième étape consistant à corriger, lorsque le convertisseur actif est en cours de fonctionnement, la tension de sortie (Vdc1) détectée au cours de la première étape avec la valeur de correction, en vue de mettre en oeuvre une commande de rapport élévateur.

4. Programme pour commander un convertisseur actif (3) en vue d'éliminer des harmoniques supérieures d'un courant d'entrée contenant les harmoniques supérieures sortant d'un circuit de redressement (2) pour convertir un courant alternatif en courant continu, le programme amenant un ordinateur à exécuter :

un premier processus consistant à détecter une tension d'entrée (Vin) et une tension de sortie (Vdc) du convertisseur actif (3) ;
un deuxième processus consistant à déterminer, dans le cas où le convertisseur actif n'est pas en cours de fonctionnement, une valeur de correction, qui correspond à un écart de détection (K) et qui est utilisée en vue de corriger un écart de la tension de sortie (Vdc_0) par rapport à la tension d'entrée (Vin_0) détectée au cours du premier processus, la valeur de correction correspondant à un rapport ($\gamma$1/ $\gamma$2) d'une première erreur ($\gamma$1) entre la tension d'entrée réelle (Vin_0) et la tension d'entrée (Vin1_0) détectée par le moyen de détection de tension à une seconde erreur ($\gamma$2) entre la tension de sortie réelle (Vdc_0) et la tension de sortie (Vdc1_0) détectée par le moyen de détection de tension ; et
un troisième processus consistant à corriger, lorsque le convertisseur actif est en cours de fonctionnement, la tension de sortie (Vdc1) détectée au cours du premier processus avec la valeur de correction, en vue de mettre en oeuvre une commande de rapport élévateur.

# FIG. 1

EP 2 731 244 B1

# FIG. 2

Vdc1_0

Vdc

CORRECTED Vdc2=Vdc1×K

Vin

Vin1_0

Vin1

Vdc2

Vin=Vdc

Vin1_0≠Vdc1_0

Vdc2=Vin1

（a）

（b）

（c）

EP 2 731 244 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11341684 B
- US 2008315852 A